# EUROPEAN PATENT APPLICATION

(11) **EP 4 838 844 A1**
(43) Date of publication of application: **11.11.2026**
(21) Application number: 24921576.5
(22) Date of filing: 30.10.2024
(51) Int. Cl.: H04L 27/26

(54) **DATA TRANSMISSION METHOD, AND DEVICE AND STORAGE MEDIUM**

(30) Priority: 01.02.2024 CN 202410154322
(71) Applicant: ZTE Corporation, Shenzhen, Guangdong 518057 (CN)
(72) Inventor: XIN, Yu, Shenzhen, Guangdong 518057 (CN); BAO, Tong, Shenzhen, Guangdong 518057 (CN); HUA, Jian, Shenzhen, Guangdong 518057 (CN)
(74) Representative: Aipex B.V.
(86) International application number: PCT/CN2024/128513
(87) International publication number: WO 2025/161552

(57) **Abstract**

Provided are a data transmission method, a device, and a storage medium. The data transmission method includes performing point-wise multiplication on a first frequency-domain data sequence and a second frequency-domain data sequence to obtain a third frequency-domain data sequence, where the first frequency-domain data sequence is pre-generated; performing an inverse Fourier transform on the third frequency-domain data sequence to obtain a first time-domain data sequence; and transmitting the first time-domain data sequence on a physical time-frequency resource. The second frequency-domain data sequence is obtained by a Fourier transform on a second time-domain data sequence. The second time-domain data sequence includes the following three non-zero elements: a first element, a second element, and a third element. The ratio of the first element to the second element is complex conjugates of and is different from the ratio of the third element to the second element.

## Description

### TECHNICAL FIELD

The present application relates to the field of communication technologies, for example, a data transmission method, a device, and a storage medium.

### BACKGROUND

In high-frequency scenarios, path loss and shadow fading are relatively large. Therefore, the signal-to-noise ratio (SNR) in some areas at a cell edge is very low. In addition, in high-frequency scenarios, the efficiency of a power amplifier (PA) is relatively low. To improve the SNR and reduce the battery power consumption of a user equipment (UE), it is required that the peak-to-average power ratio (PAPR) of a signal transmitted by the UE be relatively low.

In a massive machine-type communication (mMTC) scenario, some user equipment is expected to significantly reduce battery power consumption, for example, to achieve a battery life of more than ten years. Therefore, to improve the PA efficiency of such UE, it is required that the PAPR of the transmitted signal be relatively low. Under the condition of non-orthogonal access of a large number of users, the signal to interference plus noise ratio (SINR) is very low. Therefore, there is an urgent need for a signal modulation scheme with low modulation and coding scheme (MCS) and low PAPR.

Although a discrete Fourier transform-spread-orthogonal frequency division multiplexing (DFT-s-OFDM) signal has a relatively low PAPR, it cannot meet the requirements of application scenarios requiring even lower PAPR in 6G.

### SUMMARY

Embodiments of the present application provide a data transmission method, a device, and a storage medium, effectively reducing the peak-to-average power ratio (PAPR) of a signal modulation scheme.

Embodiments of the present application provide a data transmission method. The data transmission method includes performing point-wise multiplication on a first frequency-domain data sequence and a second frequency-domain data sequence to obtain a third frequency-domain data sequence, where the first frequency-domain data sequence is pre-generated; performing an inverse Fourier transform on the third frequency-domain data sequence to obtain a first time-domain data sequence; and transmitting the first time-domain data sequence on a physical time-frequency resource. The second frequency-domain data sequence is obtained by a Fourier transform on a second time-domain data sequence. The second time-domain data sequence includes the following three non-zero elements: a first element, a second element, and a third element. The ratio of the first element to the second element and the ratio of the third element to the second element are complex conjugates of each other and are different from each other.

Embodiments of the present application provide a communication device. The communication device includes a memory and at least one processor. The memory is configured to store at least one program. When executed by the at least one processor, the at least one program causes the at least one processor to perform the data transmission method of any previous embodiment.

Embodiments of the present application provide a storage medium. The storage medium stores a computer program which, when executed by a processor, causes the processor to perform the data transmission method of any previous embodiment.

### BRIEF DESCRIPTION OF DRAWINGS

FIG. 1 is a flowchart of a data transmission method according to embodiments of the present application.
FIG. 2 is a flowchart of generating a first time-domain data sequence according to embodiments of the present application.
FIG. 3 is a flowchart of generating a first time-domain data sequence according to embodiments of the present application.
FIG. 4 is a flowchart of generating a first time-domain data sequence according to embodiments of the present application.
FIG. 5 is a diagram illustrating a third time-domain data sequence according to embodiments of the present application.
FIG. 6 is a diagram illustrating a third time-domain data sequence according to embodiments of the present application.
FIG. 7 is a diagram illustrating a third time-domain data sequence according to embodiments of the present application.
FIG. 8 is a flowchart of generating a first time-domain data sequence according to embodiments of the present application.
FIG. 9 is a flowchart of generating a first time-domain data sequence according to embodiments of the present application.
FIG. 10 is a block diagram of a data transmission apparatus according to embodiments of the present application.
FIG. 11 is a diagram illustrating the structure of a communication device according to embodiments of the present application.

### DETAILED DESCRIPTION

Embodiments of the present application are described hereinafter in conjunction with the drawings. The present application is described below in conjunction with embodiments and the drawings. The embodiments described below are intended to explain the present application and not to limit the scope of the present application.

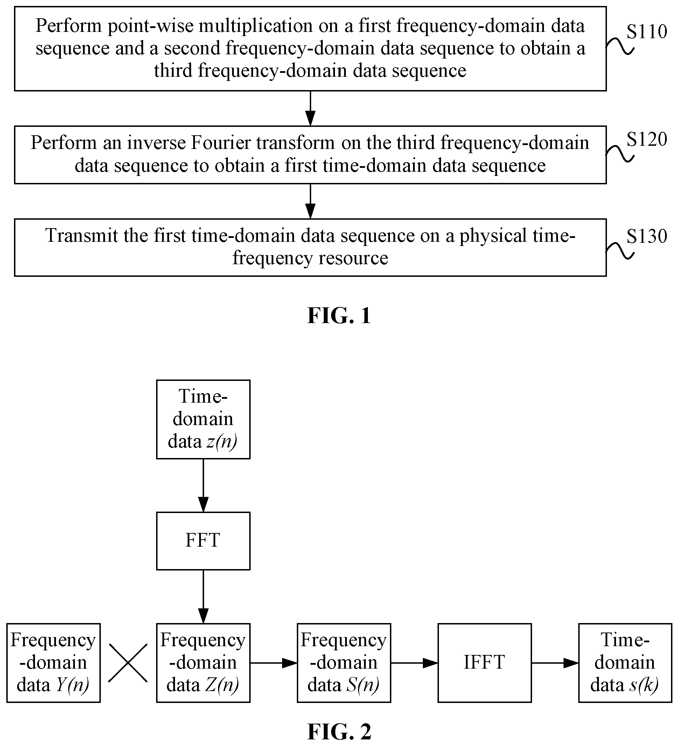

In an embodiment, FIG. 1 is a flowchart of a data transmission method according to embodiments of the present application. This embodiment is applied to a scenario of designing a signal modulation scheme with reduced PAPR. As shown in FIG. 1, this embodiment includes S110 to S130.

In S110, point-wise multiplication is performed on a first frequency-domain data sequence and a second frequency-domain data sequence to obtain a third frequency-domain data sequence.

The first frequency-domain data sequence is pre-generated. The first frequency-domain data sequence includes at least two elements. In an example, the first frequency-domain data sequence may be obtained by a Fourier transform on a time-domain data sequence. In an embodiment, a binary data sequence may be pre-generated, constellation modulation is performed on the binary data sequence, zeros are inserted between every two adjacent elements in the modulated data sequence to obtain the time-domain data sequence, and a Fourier transform is performed on the time-domain data sequence to generate the first frequency-domain data sequence. In an example, after the time-domain data sequence is transformed into a frequency-domain data sequence, N-times repetition may be performed to form the first frequency-domain data sequence. The second frequency-domain data sequence is a data sequence used for signal modulation. The second frequency-domain data sequence may be a predefined data sequence or may be obtained by a Fourier transform on a predefined second time-domain data sequence. In an example, the second time-domain data sequence includes three non-zero elements, namely a first element, a second element, and a third element. The ratio of the first element to the second element and the ratio of the third element to the second element are complex conjugates of each other and are different from each other. Meanwhile, the modulus value of the ratio of the first element to the second element and the modulus value of the ratio of the third element to the second element are the same and are both √2/2. The three non-zero elements in the second time-domain data sequence satisfying this relationship can reduce the peak-to-average power ratio (PAPR) of the time-domain data sequence. The third frequency-domain data sequence is a frequency-domain data sequence obtained by point-wise multiplication on the first frequency-domain data sequence and the second frequency-domain data sequence and includes the same number of elements as the first frequency-domain data sequence and the second frequency-domain data sequence. The first frequency-domain data sequence, the second frequency-domain data sequence, and the third frequency-domain data sequence are all frequency-domain data. Point-wise multiplication is performed on the first frequency-domain data sequence and the second frequency-domain data sequence to form the third frequency-domain data sequence.

In an example, the first frequency-domain data sequence, the second frequency-domain data sequence, the third frequency-domain data sequence, and the second time-domain data sequence include the same number of elements; and the first time-domain data sequence includes more than one element.

In S120, an inverse Fourier transform is performed on the third frequency-domain data sequence to obtain a first time-domain data sequence.

The first time-domain data sequence is a time-domain data sequence to be transmitted from a transmitting end to a receiving end. The first time-domain data sequence may be obtained by an inverse Fourier transform on the third frequency-domain data sequence and is time-domain data. In an example, since the third frequency-domain data sequence is frequency-domain data, an inverse Fourier transform is performed on the third frequency-domain data sequence to form the first time-domain data sequence.

In S130, the first time-domain data sequence is transmitted on a physical time-frequency resource.

Point-wise multiplication is performed on the first frequency-domain data sequence and the second frequency-domain data sequence to obtain the third frequency-domain data sequence. An inverse Fourier transform is performed on the third frequency-domain data sequence to obtain the first time-domain data sequence. In this manner, the peak-to-average power ratio (PAPR) of the time-domain data sequence is reduced.

In an embodiment, the second time-domain data sequence includes the following three non-zero elements: a first element, a second element, and a third element.

In an embodiment, the modulus value of the ratio of the first element to the second element is equal to the modulus value of the ratio of the third element to the second element.

In an embodiment, the modulus value of the ratio of the first element to the second element and the modulus value of the ratio of the third element to the second element may be both $\frac{\sqrt{2}}{2}$.

In an embodiment, the ratio of the first element to the second element and the ratio of the third element to the second element are complex conjugates of each other.

In an embodiment, the complex phase of the ratio of the first element to the second element and the complex phase of the ratio of the third element to the second element are opposite to each other. The complex phase of the ratio of the first element to the second element refers to the phase of a complex number corresponding to the ratio of the first element to the second element. The complex phase of the ratio of the third element to the second element refers to the phase of a complex number corresponding to the ratio of the third element to the second element. The sum of the complex phase of the ratio of the first element to the second element and the complex phase of the ratio of the third element to the second element is 0.

In an embodiment, the complex phase of the ratio of the first element to the second element and the complex phase of the ratio of the third element to the second element each include $\frac{π}{4}$ or $- - \frac{π}{4}$; and the complex phase of the ratio of the first element to third element includes $\frac{π}{2}$ or $- - \frac{π}{2}$.

In an example, when the complex phase of the ratio of the first element to the second element is $\frac{π}{4}$, the complex phase of the ratio of the third element to the second element is $- \frac{π}{4}$; and conversely, when the complex phase of the ratio of the first element to the second element is $- \frac{π}{4}$, the complex phase of the ratio of the third element to the second element is $\frac{π}{4}$. The complex phase of the ratio of the first element to the third element may be $\frac{π}{2}$ or $- \frac{π}{2}$.

In an embodiment, the value of the ratio of the first element to the second element includes $\frac{1 - j}{2}$ or $\frac{1 + j}{2}$; and the value of the ratio of the third element to the second element includes $\frac{1 - j}{2}$ or $\frac{1 + j}{2}$.

In an example, when the value of the ratio of the first element to the second element is $\frac{1 - j}{2}$, the value of the ratio of the third element to the second element is $- \frac{1 + j}{2}$; and conversely, when the value of the ratio of the first element to the second element is $- \frac{1 + j}{2}$, the value of the ratio of the third element to the second element is $\frac{1 - j}{2}$.

In an embodiment, the sum of the first element and the third element is equal to the second element. The value of the first element and the value of the third element are added to obtain the value of the second element.

In an embodiment, the second time-domain data sequence includes one set of the following sets of elements: $\frac{1 - j}{2} , 1 , \frac{1 + j}{2} ;$ $\frac{1 + j}{2} , 1 , \frac{1 - j}{2} ;$ $1 , 1 - j , - j ;$ $- j , 1 - j , 1 ;$ $1 , 1 + j , j ;$ $j , 1 + j , 1 ;$ $- 1 , - 1 + j , j ;$ $j , - 1 + j , - 1 ;$ $- 1 , - 1 - j , - j ;$ or $- j , - 1 - j , 1 .$

In an embodiment, the data transmission method also includes performing constellation modulation on a pre-generated binary data sequence to obtain a third time-domain data sequence; inserting zeros between every two adjacent elements in the third time-domain data sequence to obtain a fourth time-domain data sequence; and performing a Fourier transform on the fourth time-domain data sequence to obtain the first frequency-domain data sequence.

The binary data sequence is a data sequence including 0 and 1. The number of elements in the binary data sequence is greater than 1. The third time-domain data sequence refers to a binary data sequence subjected to constellation modulation. The number of elements in the third time-domain data sequence is greater than 1. The fourth time-domain data sequence is obtained by a zero-insertion operation on the third time-domain data sequence. In an example, inserting zeros between every two adjacent elements in the third time-domain data sequence may include inserting a zero after each element in the third time-domain data sequence or inserting a zero before each element in the third time-domain data sequence. In an embodiment, a binary data sequence may be generated first, and then constellation modulation is performed on the binary data sequence to obtain the third time-domain data sequence. The constellation modulation may include, but is not limited to, binary phase shift keying (BPSK) modulation. Zeros are then inserted between every two adjacent elements in the third time-domain data sequence to obtain the fourth time-domain data sequence. A Fourier transform is performed on the fourth time-domain data sequence to generate the first frequency-domain data sequence.

In an embodiment, the data transmission method also includes performing constellation modulation on a pre-generated binary data sequence to obtain a third time-domain data sequence; performing a Fourier transform on the third time-domain data sequence to obtain a fourth frequency-domain data sequence; and repeating the fourth frequency-domain data sequence by a first multiple to obtain the first frequency-domain data sequence.

The first multiple is a preset value and is a real number greater than 1. The fourth frequency-domain data sequence refers to a data sequence obtained by a Fourier transform on the third time-domain data sequence. In an example, constellation modulation is performed on the pre-generated binary data sequence to obtain the third time-domain data sequence, and then a Fourier transform is performed on the third time-domain data sequence to form the fourth frequency-domain data sequence. The fourth frequency-domain data sequence may be repeated to generate the first frequency-domain data sequence. Since a maximum ratio combining detection algorithm may be used at the receiving end, the signal-to-noise ratio (SNR) of demodulation performance of the first frequency-domain data sequence can be improved.

In an embodiment, the constellation modulation includes binary phase shift keying (BPSK) modulation.

In an embodiment, the third time-domain data sequence includes: constellation-modulated data; or constellation-modulated data and reference signal data.

The number of reference signal data elements may be at least one. Both the reference signal data and the constellation-modulated data may use the BPSK modulation scheme. In an example, reference signal data may be present at both ends of the third time-domain data sequence or in the middle of the third time-domain data sequence. The length of reference signal data added at the tail is greater than the length of reference signal data added at the head. Both the constellation-modulated data and the reference signal data may use the BPSK modulation scheme.

In an embodiment, the second frequency-domain data sequence includes a predefined frequency-domain data sequence or a predefined time-domain data sequence.

In an example, a frequency-domain data sequence may be predefined as the second frequency-domain data sequence, or a time-domain data sequence may be predefined as the second time-domain data sequence, and a Fourier transform is performed on the second time-domain data sequence to generate the second frequency-domain data sequence.

In an embodiment, performing the inverse Fourier transform on the third frequency-domain data sequence includes performing an oversampled inverse Fourier transform on the third frequency-domain data sequence, where the total number of elements in the third frequency-domain data sequence is less than the total number of elements in the first time-domain data sequence.

In an embodiment, zero-padding may be performed at both ends of the third frequency-domain data sequence, and then an oversampled inverse Fourier transform is performed to obtain the first time-domain data sequence. The total number of elements in the third frequency-domain data sequence is less than the total number of elements in the first time-domain data sequence.

In an embodiment, before performing the inverse Fourier transform on the third frequency-domain data sequence to obtain the first time-domain data sequence, the method also includes repeating the third frequency-domain data sequence by a second multiple to obtain a fifth frequency-domain data sequence.

Correspondingly, performing the inverse Fourier transform on the third frequency-domain data sequence to obtain the first time-domain data sequence includes performing point-wise multiplication on the fifth frequency-domain data sequence and a predefined sixth frequency-domain data sequence to obtain a seventh frequency-domain data sequence; and performing an inverse Fourier transform on the seventh frequency-domain data sequence to obtain the first time-domain data sequence. The fifth frequency-domain data sequence, the sixth frequency-domain data sequence, and the seventh frequency-domain data sequence have same number of elements that is less than or equal to the total number of elements in the first time-domain data sequence.

The second multiple is a preset value and is a real number greater than 1. The fifth frequency-domain data sequence is a third frequency-domain data sequence repeated by the second multiple. The sixth frequency-domain data sequence may be a predefined data sequence or may be obtained by a Fourier transform on predefined time-domain data. Point-wise multiplication is performed on the fifth frequency-domain data sequence and the sixth frequency-domain data sequence to generate the seventh frequency-domain data sequence. An inverse Fourier transform is performed on the seventh frequency-domain data sequence to obtain the corresponding first time-domain data sequence. By repeating the third frequency-domain data sequence by the second multiple, it is possible to use the maximum ratio combining detection algorithm at the receiving end to improve the SNR of demodulation performance and compensate for a loss of transmission efficiency.

In an embodiment, the data transmission method also includes multiplying the first time-domain data sequence by a preconfigured complex constant to obtain a new first time-domain data sequence. The complex constant may be a preset coefficient. The first time-domain data sequence may be multiplied by a preconfigured complex constant to obtain a new first time-domain data sequence, and the new first time-domain data sequence is transmitted on a time-frequency resource.

In an embodiment, in the second time-domain data sequence, the first-position element is the second element, the second-position element is the third element, the last-position element is the first element, and all other-position elements are zero.

In an embodiment, in the second time-domain data sequence, the last-position element may be used as the first element, the first-position element may be used as the second element, the second-position element may be used as the third element, and other-position elements are set to 0. A Fourier transform is performed on the second time-domain data sequence to obtain the second frequency-domain data sequence. Point-wise multiplication is performed on the second frequency-domain data sequence and the first frequency-domain data sequence to generate the third frequency-domain data sequence, where the first frequency-domain data sequence is pre-generated.

In an embodiment, the first element is cyclically adjacent to the second element. For example, if the first element is the first-position element in the second time-domain data sequence, the second element may be the second-position element in the second time-domain data sequence; or if the first element is the last-position element in the second time-domain data sequence, the second element may be the first-position element in the second time-domain data sequence.

In an embodiment, the second frequency-domain data sequence is obtained by a Fourier transform on three delay paths, where delay differences of the three delay paths are -1, 0, and 1 respectively, and coefficients of the three delay paths are the first element, the second element, and the third element respectively.

In an example, in the process of performing a Fourier transform on the second time-domain data sequence to form the second frequency-domain data sequence, the second time-domain data sequence includes three delay paths, delay differences of the three delay paths are -1, 0, and 1 respectively, and the first element, the second element, and the third element are used as coefficients of the three delay paths. In this manner, the second frequency-domain data sequence is generated.

The following describes the generation process of the first time-domain data sequence by using different examples.

In the following examples, the data modulation process is described using an example in which the second time-domain data sequence includes three non-zero elements (that is, the first element, the second element, and the third element). The first element is denoted as a, the second element is denoted as b, and the third element is denoted as c, the power factor is denoted as p, and the three non-zero elements included in the second time-domain data sequence are denoted as [a, b, c]. In the following examples, the first frequency-domain data sequence is denoted as [Y(n)], the second frequency-domain data sequence is denoted as [Z(n)], the third frequency-domain data sequence is denoted as [S(n)], the fourth frequency-domain data sequence is denoted as [X(i)], the fifth frequency-domain data sequence is denoted as [W(u)], the sixth frequency-domain data sequence is denoted as [F(u)], the seventh frequency-domain data sequence is denoted as [V(u)], the first time-domain data sequence is denoted as [s(k)], the second time-domain data sequence is denoted as [z(n)], the third time-domain data sequence is denoted as [x(i)], and the fourth time-domain data sequence is denoted as [y(n)].

Example One: FIG. 2 is a flowchart of generating a first time-domain data sequence according to embodiments of the present application. As shown in FIG. 2, it is assumed that there are two frequency-domain data sequences, namely the first frequency-domain data sequence [Y(n)] and the second frequency-domain data sequence [Z(n)]. First, point-wise multiplication is performed on the first frequency-domain data sequence [Y(n)] and the second frequency-domain data sequence [Z(n)] to form the third frequency-domain data sequence [S(n)], and then an inverse Fourier transform is performed on the third frequency-domain data sequence [S(n)] to form the first time-domain data sequence [s(k)]. The second frequency-domain data sequence [Z(n)] is obtained by a Fourier transform on the second time-domain data sequence [z(n)]. The second time-domain data sequence [z(n)] includes three non-zero elements a, b, and c. The three non-zero elements a, b, and c satisfy $\frac{a}{b} = conjugate \left(\frac{c}{b}\right)$. $\frac{a}{b} \neq \frac{c}{b}$. conjugate(.) represents a conjugate operation. That is, $\frac{a}{b}$ and $\frac{c}{b}$ are complex conjugates of each other.

Example Two: This example describes characteristics satisfied by the non-zero elements a, b, and c in the second time-domain data sequence [z(n)]. The second time-domain data sequence [z(n)] is subjected to a Fourier transform to form the second frequency-domain data sequence [Z(n)]. The second time-domain data sequence [z(n)] includes three non-zero elements a, b, and c. The three non-zero elements a, b, and c have the following characteristics:
(1) a/b = conjugate(c/b). a/b ≠ c/b. conjugate(.) represents a conjugate operation. That is, a/b and c/b are complex conjugates of each other.
(2) $module \left(a/b\right) = module \left(c/b\right) = \frac{\sqrt{2}}{2}$. module(.) represents a modulus operation. That is, modulus values of a/b and c/b are the same.
(3) φ(a/b) = -φ(c/b) = ±π/4. φ(a/c) = ±π/2. φ(.) represents the phase of a complex number. That is, the complex phase of the ratio of a to b and the complex phase of the ratio of c to b may both be ±π/4. The complex phase of the ratio of a to c may be ±π/2.
(4) When $a / b = \frac{1 - j}{2} , c / b = \frac{1 + j}{2} ;$ and when $a / b = \frac{1 + j}{2} , c / b = \frac{1 - j}{2} .$
(5) $a + c = b .$

In an example, as shown in Table 1, Table 1 lists 10 second time-domain data sequences [a, b, c].

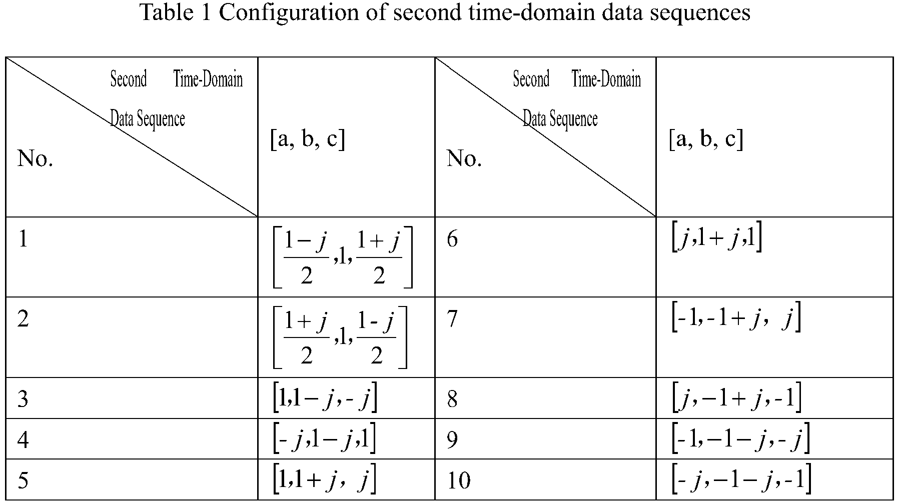

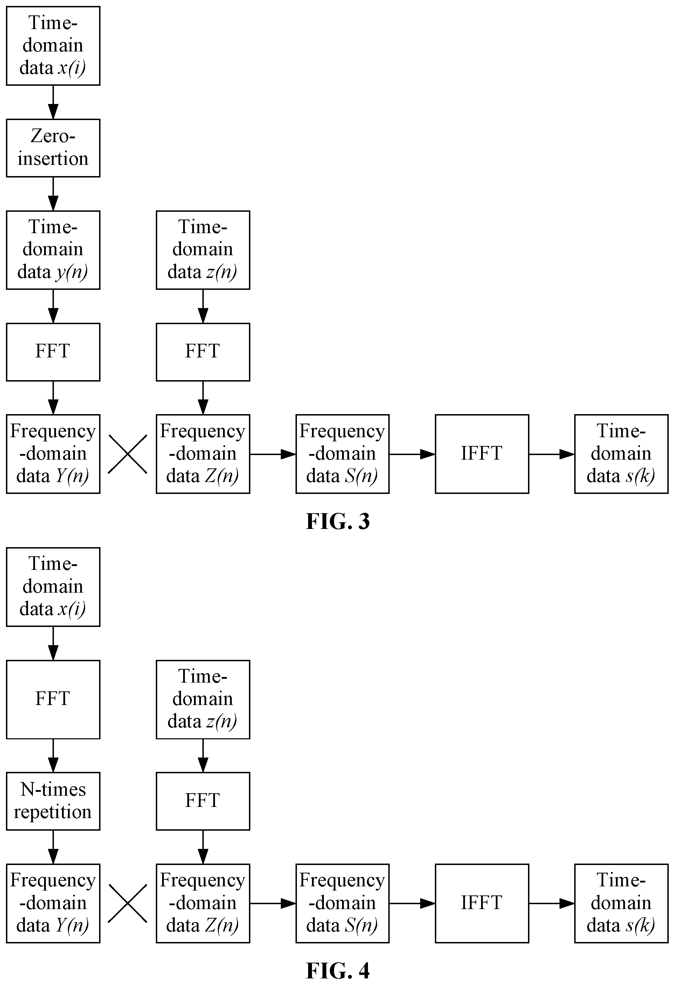

Example Three: This example describes the process of forming the first time-domain data sequence [s(k)]. FIG. 3 is a flowchart of generating a first time-domain data sequence according to embodiments of the present application. As shown in FIG. 3, point-wise multiplication is performed on the first frequency-domain data sequence [Y(n)] and the second frequency-domain data sequence [Z(n)] to form the third frequency-domain data sequence [S(n)], and then an inverse Fourier transform is performed on the third frequency-domain data sequence [S(n)] to form the first time-domain data sequence [s(k)]. The specific process is as follows:
(1) Zero insertion is performed on the third time-domain data sequence [x(i)] to form the fourth time-domain data sequence [y(n)], including at least one of: inserting 0 after each element in the third time-domain data sequence [x(i)] to form the fourth time-domain data sequence [y(n)]; or inserting 0 before each element in the third time-domain data sequence [x(i)] to form the fourth time-domain data sequence [y(n)].
(2) A fast Fourier transform (FFT) is performed on the fourth time-domain data sequence [y(n)] to form the first frequency-domain data sequence [Y(n)].
(3) Point-wise multiplication is performed on the first frequency-domain data sequence [Y(n)] and the second frequency-domain data sequence [Z(n)] to form the third frequency-domain data sequence [S(n)]. An FFT is performed on the second time-domain data sequence [z(n)] to form the second frequency-domain data sequence [Z(n)]. The second frequency-domain data sequence [Z(n)] is a predefined data sequence, or the second time-domain data sequence [z(n)] is a predefined data sequence.
(4) An inverse Fourier transform is performed on the third frequency-domain data sequence [S(n)] to form the first time-domain data sequence [s(k)].

Example Four: This example describes the process of forming the first time-domain data sequence [s(k)]. FIG. 4 is a flowchart of generating a first time-domain data sequence according to embodiments of the present application. As shown in FIG. 4, point-wise multiplication is performed on the first frequency-domain data sequence [Y(n)] and the second frequency-domain data sequence [Z(n)] to form the third frequency-domain data sequence [S(n)], and then an inverse Fourier transform is performed on the third frequency-domain data sequence [S(n)] to form the first time-domain data sequence [s(k)]. The specific process is as follows:
(1) An FFT is performed on the third time-domain data sequence [x(i)] to form the fourth frequency-domain data sequence [X(i)].
(2) The fourth frequency-domain data sequence [X(i)] is repeated by a first multiple to form the first frequency-domain data sequence [Y(n)]. The first multiple is equal to 2 in this example.
(3) Point-wise multiplication is performed on the first frequency-domain data sequence [Y(n)] and the second frequency-domain data sequence [Z(n)] to form the third frequency-domain data sequence [S(n)].

In an example, an FFT is performed on the second time-domain data sequence [z(n)] to form the second frequency-domain data sequence [Z(n)]. The second frequency-domain data sequence [Z(n)] is a predefined data sequence, or the second time-domain data sequence [z(n)] is a predefined data sequence.

(4) An inverse Fourier transform is performed on the third frequency-domain data sequence [S(n)] to form the first time-domain data sequence [s(k)].

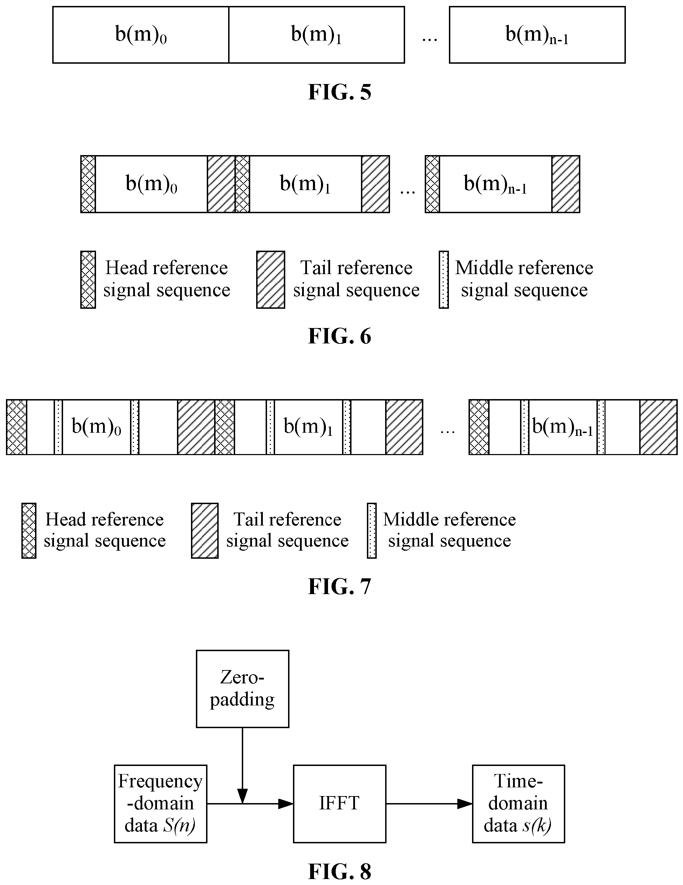

Example Five: This example describes a BPSK modulation scheme used by the third time-domain data sequence [x(i)]. FIG. 5 is a diagram illustrating a third time-domain data sequence according to embodiments of the present application. FIG. 6 is a diagram illustrating a third time-domain data sequence according to embodiments of the present application. FIG. 7 is a diagram illustrating a third time-domain data sequence according to embodiments of the present application.

In FIG. 5, FIG. 6, and FIG. 7, three different OFDM symbols are illustrated. It is assumed that each includes n OFDM symbols. As shown in FIG. 5, a binary data sequence [b(m)] composed of 0 and 1 is subjected to BPSK constellation modulation to form the third time-domain data sequence [x(i)].

As shown in FIG. 6, a binary data sequence [b(m)] composed of 0 and 1 is subjected to BPSK constellation modulation to form the third time-domain data sequence [x(i)]. The same head reference signal sequence is inserted before each OFDM symbol. The same tail reference signal sequence is inserted after each OFDM symbol. That is, each OFDM symbol includes reference signal data and constellation-modulated data. Both the reference signal data and the constellation-modulated data use a BPSK modulation scheme. The length of the tail reference signal sequence is greater than the length of the head reference signal sequence.

As shown in FIG. 7, a binary data sequence [b(m)] composed of 0 and 1 is subjected to BPSK constellation modulation to form the third time-domain data sequence [x(i)]. The same head reference signal sequence is inserted before each OFDM symbol. The same tail reference signal sequence is inserted after each OFDM symbol. The same or different middle reference signal sequences may also be inserted in the middle of each OFDM symbol. That is, each OFDM symbol includes reference signal data and constellation-modulated data. Both the reference signal data and the constellation-modulated data use a BPSK modulation scheme. The length of the tail reference signal sequence is greater than the length of the head reference signal sequence.

Example Six: This example describes performing an oversampled inverse Fourier transform on the third frequency-domain data sequence [S(n)]. FIG. 8 is a flowchart of generating a first time-domain data sequence according to embodiments of the present application. As shown in FIG. 8, performing the inverse Fourier transform on the third frequency-domain data sequence [S(n)] to form the first time-domain data sequence [s(k)] also includes performing zero-padding at both ends of the third frequency-domain data sequence [S(n)] and then performing an oversampled inverse Fourier transform. Here n = 1, 2, ..., N, and k = 1, 2, ..., K, where N < K.

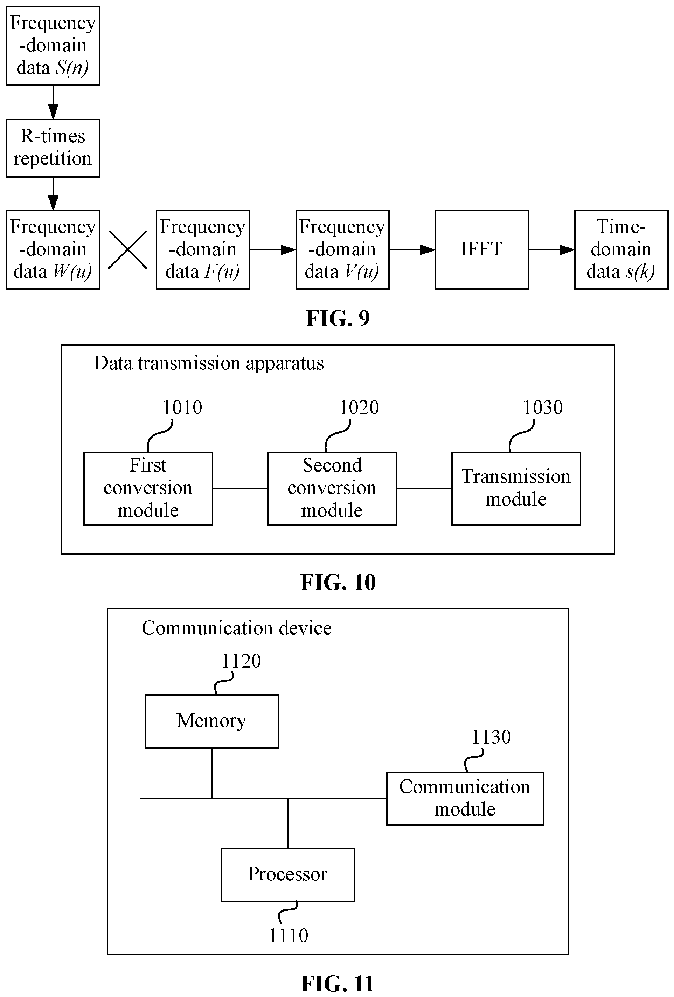

Example Seven: This example describes the process of forming the first time-domain data sequence [s(k)]. FIG. 9 is a flowchart of generating a first time-domain data sequence according to embodiments of the present application. As shown in FIG. 9, an inverse Fourier transform is performed on the third frequency-domain data sequence [S(n)] to form the first time-domain data sequence [s(k)]. The specific process is as follows:
(1) The third frequency-domain data sequence [S(n)] is repeated by a second multiple to form the fifth frequency-domain data sequence [W(u)].
(2) Point-wise multiplication is performed on the fifth frequency-domain data sequence [W(u)] and the sixth frequency-domain data sequence [F(u)] to form the seventh frequency-domain data sequence [V(u)]. The sixth frequency-domain data sequence [F(u)] is a predefined data sequence.
(3) An inverse Fourier transform is performed on the seventh frequency-domain data sequence [V(u)] to form the first time-domain data sequence [s(k)].

Example Eight: This example describes forming the second frequency-domain data sequence [Z(n)] by performing a Fourier transform on the second time-domain data sequence [z(n)]. A Fourier transform is performed on the second time-domain data sequence [z(n)] to form the second frequency-domain data sequence [Z(n)]. The second time-domain data sequence [z(n)] satisfies z(1) = b, z(2) = c, z(J) = a, and z(n) = 0 (n = 3, 4, ..., J-1). That is, in the second time-domain data sequence, the first-position element is the second element, the second-position element is the third element, the last-position element is the first element, and other-position elements are 0.

Example Nine: This example describes forming the second frequency-domain data sequence [Z(n)] by performing a Fourier transform on the second time-domain data sequence [z(n)]. A Fourier transform is performed on the second time-domain data sequence [z(n)] to form the second frequency-domain data sequence [Z(n)]. The second time-domain data sequence [z(n)] includes three delay paths, delay differences of the three delay paths are -1, 0, and 1, respectively, and coefficients of the three delay paths are three non-zero elements a, b, and c, respectively. That is, the second frequency-domain data sequence [Z(n)] is formed from the three delay paths through the Fourier transform.

In an embodiment, FIG. 10 is a block diagram of a data transmission apparatus according to embodiments of the present application. As shown in FIG. 10, the data transmission apparatus of this embodiment includes a first conversion module 1010, a second conversion module 1020, and a transmission module 1030.

The first conversion module 1010 is configured to perform point-wise multiplication on a pre-generated first frequency-domain data sequence and a second frequency-domain data sequence to obtain a third frequency-domain data sequence.

The second conversion module 1020 is configured to perform an inverse Fourier transform on the third frequency-domain data sequence to obtain a first time-domain data sequence.

The transmission module 1030 is configured to transmit the first time-domain data sequence on a physical time-frequency resource. The second frequency-domain data sequence is obtained by a Fourier transform on a second time-domain data sequence. The second time-domain data sequence includes the following three non-zero elements: a first element, a second element, and a third element. The ratio of the first element to the second element and the ratio of the third element to the second element are complex conjugates of each other and are different from each other.

In an embodiment, the modulus value of the ratio of the first element to the second element is equal to the modulus value of the ratio of the third element to the second element.

In an embodiment, the complex phase of the ratio of the first element to the second element and the complex phase of the ratio of the third element to the second element are opposite to each other.

In an embodiment, the complex phase of the ratio of the first element to the second element and the complex phase of the ratio of the third element to the second element each include $\frac{π}{4}$ or $- \frac{π}{4}$; and the complex phase of the ratio of the first element to the third element includes $\frac{π}{2}$ or $- \frac{π}{2}$.

In an embodiment, the value of the ratio of the first element to the second element includes $\frac{1 - j}{2}$ or $\frac{1 + j}{2}$; and the value of the ratio of the third element to the second element includes $\frac{1 - j}{2}$ or $\frac{1 + j}{2}$. 2 2

In an embodiment, the sum of the first element and the third element is equal to the second element.

In an embodiment, the second time-domain data sequence includes one set of the following sets of elements: $\frac{1 - j}{2} , 1 , \frac{1 + j}{2} ;$ $\frac{1 + j}{2} , 1 , \frac{1 - j}{2} ;$ $1 , 1 - j , - j ;$ $- j , 1 - j , 1 ;$ $1 , 1 + j , j ;$ $j , 1 + j , 1 ;$ $- 1 , - 1 + j , j ;$ $j , - 1 + j , - 1 ;$ $- 1 , - 1 - j , - j ;$ or $- j , - 1 - j , 1 .$

In an embodiment, the data transmission apparatus also includes a third conversion module, a fourth conversion module, and a fifth conversion module.

The third conversion module is configured to perform constellation modulation on a pre-generated binary data sequence to obtain a third time-domain data sequence. The fourth conversion module is configured to insert zeros between every two adjacent elements in the third time-domain data sequence to obtain a fourth time-domain data sequence. The fifth conversion module is configured to perform a Fourier transform on the fourth time-domain data sequence to obtain the first frequency-domain data sequence.

In an embodiment, the data transmission apparatus also includes a sixth conversion module, a seventh conversion module, and an eighth conversion module.

The sixth conversion module is configured to perform constellation modulation on a pre-generated binary data sequence to obtain a third time-domain data sequence. The seventh conversion module is configured to perform a Fourier transform on the third time-domain data sequence to obtain a fourth frequency-domain data sequence. The eighth conversion module is configured to repeat the fourth frequency-domain data sequence by a first multiple to obtain the first frequency-domain data sequence.

In an embodiment, the constellation modulation includes binary phase shift keying (BPSK) modulation.

In an embodiment, the third time-domain data sequence includes: constellation-modulated data; or constellation-modulated data and reference signal data.

In an embodiment, the second frequency-domain data sequence includes a predefined frequency-domain data sequence; or the second time-domain data sequence includes a predefined time-domain data sequence.

In an embodiment, performing the inverse Fourier transform on the third frequency-domain data sequence includes performing an oversampled inverse Fourier transform on the third frequency-domain data sequence, where the total number of elements in the third frequency-domain data sequence is less than the total number of elements in the first time-domain data sequence.

In an embodiment, before performing the inverse Fourier transform on the third frequency-domain data sequence to obtain the first time-domain data sequence, the method also includes repeating the third frequency-domain data sequence by a second multiple to obtain a fifth frequency-domain data sequence.

Correspondingly, performing the inverse Fourier transform on the third frequency-domain data sequence to obtain the first time-domain data sequence includes performing point-wise multiplication on the fifth frequency-domain data sequence and a predefined sixth frequency-domain data sequence to obtain a seventh frequency-domain data sequence; and performing an inverse Fourier transform on the seventh frequency-domain data sequence to obtain the first time-domain data sequence.

The fifth frequency-domain data sequence, the sixth frequency-domain data sequence, and the seventh frequency-domain data sequence have same number of elements that is less than or equal to the total number of elements in the first time-domain data sequence.

In an embodiment, the data transmission apparatus also includes a data processing module configured to multiply the first time-domain data sequence by a preconfigured complex constant to obtain a new first time-domain data sequence.

In an embodiment, in the second time-domain data sequence, the first-position element is the second element, the second-position element is the third element, the last-position element is the first element, and all other-position elements are zero.

In an embodiment, the first element is cyclically adjacent to the second element.

In an embodiment, the second frequency-domain data sequence is obtained by a Fourier transform on three delay paths, where delay differences of the three delay paths are -1, 0, and 1 respectively, and coefficients of the three delay paths are the first element, the second element, and the third element respectively.

The data transmission apparatus of this embodiment is configured to perform the data transmission method of the embodiment shown in FIG. 1. The apparatus of this embodiment and the method have similar implementation principles and technical effects. The implementation principles and technical effects of the apparatus are not described here again.

In an embodiment, FIG. 11 is a diagram illustrating the structure of a communication device according to embodiments of the present application. As shown in FIG. 11, the communication device of the present application includes a processor 1110, a memory 1120, and a communication module 1130. One or more processors 1110 may be provided in the device. FIG. 11 shows one processor 1110 as an example. One or more memories 1120 may be provided in the device. FIG. 11 shows one memory 1120 as an example. The processor 1110, the memory 1120, and the communication module 1130 of the device may be connected by a bus or otherwise. FIG. 11 uses connection by a bus as an example. In this embodiment, the device may be a terminal or a network.

As a computer-readable storage medium, the memory 1120 may be configured to store software programs, computer-executable programs and modules, such as program instructions/modules (for example, the first conversion module 1010, the second conversion module 1020, and the transmission module 1030 in the data transmission apparatus) corresponding to the device according to any embodiment of the present application. The memory 1120 may include a program storage region and a data storage region. The program storage region may store an operating system and an application program required by at least one function. The data storage region may store data created according to the use of the device. Additionally, the memory 1120 may include a high-speed random-access memory and may also include a nonvolatile memory such as at least one disk memory, a flash memory, or another nonvolatile solid-state memory. In some examples, the memory 1120 may be remote relative to the processor 1110 and connectable to the device via a network. Examples of the network include, but are not limited to, the Internet, an intranet, a local area network, a mobile communication network, and a combination thereof. The communication module 1130 is used for data interaction between multiple communication devices.

The preceding communication device may be configured to execute the data transmission method of any preceding embodiment and has the corresponding functions and effects.

Embodiments of the present application provide a storage medium storing computer-executable instructions which, when executed by a computer processor, cause the computer processor to perform a data transmission method. The data transmission method includes performing point-wise multiplication on a pre-generated first frequency-domain data sequence and a second frequency-domain data sequence to obtain a third frequency-domain data sequence; performing an inverse Fourier transform on the third frequency-domain data sequence to obtain a first time-domain data sequence; and transmitting the first time-domain data sequence on a physical time-frequency resource. The second frequency-domain data sequence is obtained by a Fourier transform on a second time-domain data sequence. The second time-domain data sequence includes the following three non-zero elements: a first element, a second element, and a third element. The ratio of the first element to the second element and the ratio of the third element to the second element are complex conjugates of each other and are different from each other.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A data transmission method, comprising:
performing point-wise multiplication on a first frequency-domain data sequence and a second frequency-domain data sequence to obtain a third frequency-domain data sequence, wherein the first frequency-domain data sequence is pre-generated;
performing an inverse Fourier transform on the third frequency-domain data sequence to obtain a first time-domain data sequence; and
transmitting the first time-domain data sequence on a physical time-frequency resource;
wherein the second frequency-domain data sequence is obtained by a Fourier transform on a second time-domain data sequence; the second time-domain data sequence comprises the following three non-zero elements: a first element, a second element, and a third element; a ratio of the first element to the second element and a ratio of the third element to the second element are complex conjugates of each other and are different from each other.

2. The method of claim 1, wherein a modulus value of the ratio of the first element to the second element is equal to a modulus value of the ratio of the third element to the second element.

3. The method of claim 1, wherein a complex phase of the ratio of the first element to the second element and a complex phase of the ratio of the third element to the second element are opposite to each other.

4. The method of claim 1, wherein
a complex phase of the ratio of the first element to the second element and a complex phase of the ratio of the third element to the second element each comprise $\frac{π}{4}$ or $- \frac{π}{4}$; or
a complex phase of a ratio of the first element to the third element comprises $\frac{π}{2}$ or $- \frac{π}{2}$.

5. The method of claim 1, wherein
a value of the ratio of the first element to the second element comprises $\frac{1 - j}{2}$ or $\frac{1 + j}{2}$; or
a value of the ratio of the third element to the second element comprises $\frac{1 - j}{2}$ or $\frac{1 + j}{2}$.

6. The method of claim 1, wherein a sum of the first element and the third element is equal to the second element.

7. The method of claim 1, wherein the second time-domain data sequence comprises one set of the following sets of elements: $\frac{1 - j}{2} , 1 , \frac{1 + j}{2} ;$ $\frac{1 + j}{2} , 1 , \frac{1 - j}{2} ;$ $1 , 1 - j , - j ;$ $- j , 1 - j , 1 ;$ $1 , 1 + j , j ;$ $j , 1 + j , 1 ;$ $- 1 , - 1 + j , j ;$ $j , - 1 + j , - 1 ;$ $- 1 , - 1 - j , - j ;$ or $- j , - 1 - j , 1 .$

8. The method of claim 1, further comprising:
performing constellation modulation on a pre-generated binary data sequence to obtain a third time-domain data sequence;
inserting zeros between every two adjacent elements in the third time-domain data sequence to obtain a fourth time-domain data sequence; and
performing a Fourier transform on the fourth time-domain data sequence to obtain the first frequency-domain data sequence.

9. The method of claim 1, further comprising:
performing constellation modulation on a pre-generated binary data sequence to obtain a third time-domain data sequence;
performing a Fourier transform on the third time-domain data sequence to obtain a fourth frequency-domain data sequence; and
repeating the fourth frequency-domain data sequence by a first multiple to obtain the first frequency-domain data sequence.

10. The method of claim 8 or 9, wherein the constellation modulation comprises binary phase shift keying, BPSK, modulation.

11. The method of claim 8 or 9, wherein the third time-domain data sequence comprises:
constellation-modulated data; or constellation-modulated data and reference signal data.

12. The method of claim 1, wherein the second frequency-domain data sequence comprises a predefined frequency-domain data sequence or a predefined time-domain data sequence.

13. The method of claim 1, wherein performing the inverse Fourier transform on the third frequency-domain data sequence comprises:
performing an oversampled inverse Fourier transform on the third frequency-domain data sequence, wherein a total number of elements in the third frequency-domain data sequence is less than a total number of elements in the first time-domain data sequence.

14. The method of claim 1, wherein
before performing the inverse Fourier transform on the third frequency-domain data sequence to obtain the first time-domain data sequence, the method further comprises: repeating the third frequency-domain data sequence by a second multiple to obtain a fifth frequency-domain data sequence; and
performing the inverse Fourier transform on the third frequency-domain data sequence to obtain the first time-domain data sequence comprises: performing point-wise multiplication on the fifth frequency-domain data sequence and a sixth frequency-domain data sequence to obtain a seventh frequency-domain data sequence; and performing an inverse Fourier transform on the seventh frequency-domain data sequence to obtain the first time-domain data sequence;
wherein the sixth frequency-domain data sequence is pre-defined, the fifth frequency-domain data sequence, the sixth frequency-domain data sequence, and the seventh frequency-domain data sequence have same number of elements that is less than or equal to a total number of elements in the first time-domain data sequence.

15. The method of claim 1, further comprising:
multiplying the first time-domain data sequence by a preconfigured complex constant to obtain a new first time-domain data sequence.

16. The method of claim 1, wherein in the second time-domain data sequence, a first-position element is the second element, a second-position element is the third element, a last-position element is the first element, and all other-position elements are zero.

17. The method of claim 1, wherein the second frequency-domain data sequence is obtained by a Fourier transform on three delay paths, wherein delay differences of the three delay paths are -1, 0, and 1 respectively, and coefficients of the three delay paths are the first element, the second element, and the third element respectively.

18. A communication device, comprising a memory and at least one processor, wherein
the memory is configured to store at least one program; and
when executed by the at least one processor, the at least one program causes the at least one processor to perform the data transmission method of any one of claims 1 to 17.

19. A storage medium storing a computer program which, when executed by a processor, causes the processor to perform the data transmission method of any one of claims 1 to 17.
